(19) **Europäisches Patentamt**
**European Patent Office**
**Office européen des brevets**

(11) **EP 3 824 522 B1**

(12) **FASCICULE DE BREVET EUROPEEN**

(45) Date de publication et mention
de la délivrance du brevet:
**02.08.2023 Bulletin 2023/31**

(21) Numéro de dépôt: **19739303.6**

(22) Date de dépôt: **17.07.2019**

(51) Classification Internationale des Brevets (IPC):
*H02H 3/08* (2006.01)     *H02H 3/093* (2006.01)
*H02H 6/00* (2006.01)     *H02H 7/22* (2006.01)
*G06G 7/12* (2006.01)     *G06G 7/20* (2006.01)
*G06G 7/16* (2006.01)     *G05B 9/02* (2006.01)
*G05B 17/02* (2006.01)

(52) Classification Coopérative des Brevets (CPC):
**H02H 3/093; G06G 7/16; G06G 7/20; H02H 6/00; H02H 7/228**

(86) Numéro de dépôt international:
**PCT/EP2019/069203**

(87) Numéro de publication internationale:
**WO 2020/016277 (23.01.2020 Gazette 2020/04)**

(54) **DISPOSITIF D'EMULATION D'UN BILAME, ET DISPOSITIF DE PROTECTION D'UNE LIGNE ELECTRIQUE VIS-A-VIS D'UNE SURINTENSITE**

VORRICHTUNG ZUR EMULATION EINES BIMETALLSTREIFENS UND VORRICHTUNG ZUM SCHUTZ EINER ELEKTRISCHEN LEITUNG GEGEN ÜBERSPANNUNGEN

DEVICE FOR EMULATING A BIMETALLIC STRIP, AND DEVICE FOR PROTECTING AN ELECTRICAL LINE FROM OVER-CURRENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2018 FR 1800779**

(43) Date de publication de la demande:
**26.05.2021 Bulletin 2021/21**

(73) Titulaire: **THALES**
**92400 Courbevoie (FR)**

(72) Inventeur: **ABDESSELAM, Francis**
**78401 Chatou (FR)**

(74) Mandataire: **Atout PI Laplace**
**Immeuble "Visium"**
**22, avenue Aristide Briand**
**94117 Arcueil Cedex (FR)**

(56) Documents cités:
**WO-A1-97/04511**     **FR-A1- 2 130 210**
**JP-A- 2005 295 738**     **US-A1- 2007 014 066**

**Description**

L'invention se rapporte à un dispositif de protection thermique d'une ligne électrique. Elle s'applique en particulier, mais de façon non limitative, au domaine de l'aéronautique, et plus précisément à la protection thermique des câbles qui peuvent alimenter un groupe auxiliaire de puissance (utilisé par exemple lors des phases de roulage d'un aéronef).

Les lignes électriques subissent des échauffements principalement dus à la circulation du courant. Les échauffements peuvent créer des dommages sur la ligne électrique, par exemple un ramollissement du plastique entourant le câble électrique, voire un dégagement de fumée en cas de surchauffe intense. Il est nécessaire de prévoir des moyens de déconnexion des lignes électriques en cas de surchauffe afin de les protéger. La protection peut s'étendre à un circuit électrique connecté à la ligne électrique, tel que les générateurs, les lignes électriques de distribution d'énergie produite par les générateurs et les charges alimentées par les lignes. Les charges peuvent être de plusieurs types : les charges principalement résistives, par exemple mises en oeuvre en avionique pour le chauffage ou le dégivrage, et les charges principalement inductives par exemple formée par les bobinages de machines tournantes.

Il est par exemple possible de protéger une ligne contre une surintensité au moyen d'un fusible dont le rôle est de déconnecter la ligne électrique lorsque le courant électrique circulant dans la ligne dépasse une intensité donnée pendant un temps donné. Les fusibles peuvent être temporisés, notamment pour autoriser le passage de courants importants pendant de courtes durées. Ceci est notamment nécessaire lors du démarrage de machines électriques, où un courant de forte intensité peut être requis. La protection par fusible est peu précise et nécessite un changement du fusible lorsque celui-ci a coupé le courant. Le fusible est principalement utilisé pour pallier des défaillances graves de type court circuit.

Afin d'éviter d'avoir à changer des fusibles, des disjoncteurs thermiques peuvent être mis en oeuvre. Les disjoncteurs thermiques sont généralement équipés d'un bilame formé d'une poutre composite comprenant deux matériaux de coefficients de dilatation thermique différents. Lorsqu'un courant excessif traverse le bilame, celui-ci se déforme par effet Joule provoquant mécaniquement l'ouverture de la ligne. Par rapport au fusible, le disjoncteur thermique présente l'avantage de ne pas nécessiter son changement en cas de déclenchement. L'utilisation de l'effet Joule pour ouvrir la ligne tend à temporiser le déclenchement.

Cependant, la protection est, comme pour les fusibles, peu précise. De plus, les disjoncteurs à bilame ont une durée de vie assez faible. Typiquement, un tel disjoncteur supporte moins de 4000 manoeuvres. De plus, un disjoncteur thermique ne peut pas être réarmé à distance et nécessite donc une intervention manuelle. Dans l'art antérieur sont aussi divulgués dispositifs de protection fonctionnant comme un bilame, voir WO 97/04511, US 2007/014066, FR 2130210 et JP 2005295738. U

L'invention vise à pallier tout ou partie des problèmes cités plus haut en proposant un circuit fonctionnant à la façon d'un bilame et dont la durée de vie est accrue.

Un objet de l'invention est donc un dispositif d'émulation d'un bilame, le dispositif d'émulation comprenant un capteur de courant apte à mesurer un courant de ligne parcourant le dispositif d'émulation, le dispositif d'émulation étant apte à fournir une valeur représentative d'un état thermique cumulé dans le temps $t$, appelée état thermique cumulé, en additionnant par récurrence une valeur représentative d'un état thermique initial, appelée état thermique initial, et une valeur représentative d'un état thermique actuel, appelée état thermique actuel, déterminé en fonction du courant de ligne.

Selon l'invention, le dispositif d'émulation comprend un opérateur d'élévation au carré configuré pour élever au carré une valeur représentative du courant de ligne issue du capteur de courant.

Selon un premier mode de réalisation, le dispositif d'émulation comprend un composant numérique programmable configuré pour calculer l'état thermique actuel par la relation :

$$E_{th\_on} = \frac{I_P{}^2}{I_{th}{}^2} \times \left(1 - e^{\frac{-t}{\tau}}\right)$$

Où $E_{th\_on}$ est la valeur de l'état thermique actuel lorsque le dispositif d'émulation est alimenté par le courant de ligne, où $I_P$ est la valeur représentative du courant de ligne, $\tau$ une constante de temps, et $I_{th}$ un courant thermique conventionnel du bilame émulé,
et par la relation :

$$E_{th\_off} = \frac{I_P{}^2}{I_{th}{}^2} \times e^{\frac{-t}{\tau}}$$

Où $E_{th\_off}$ est la valeur de l'état thermique actuel lorsque le dispositif d'émulation n'est pas alimenté par le courant de ligne,

où $I_P$ est la valeur représentative du courant de ligne à l'instant où le dispositif d'émulation n'est plus alimenté, $\tau$ une constante de temps, et $I_{th}$ un courant thermique conventionnel du bilame émulé.

Avantageusement, le dispositif d'émulation comprend un compteur configuré pour déterminer le temps depuis l'instant où le dispositif d'émulation n'est plus alimenté.

Avantageusement, le composant numérique programmable est de type FPGA.

Selon un deuxième mode de réalisation, la valeur représentative du courant de ligne est une tension image du courant de ligne, le dispositif d'émulation comprenant au moins un circuit RC série, et comprenant au moins un condensateur aux bornes duquel est mesurée l'état thermique cumulé, le circuit RC série étant connecté à l'opérateur d'élévation au carré, l'état thermique initial étant déterminé par l'état de charge initiale du condensateur à la fin d'un cycle de charge ou de décharge, l'état thermique actuel étant déterminé par l'évolution de l'état de charge du condensateur.

Selon l'invention, l'opérateur d'élévation au carré comprend :

- un comparateur, configuré pour comparer la tension image avec un signal de rampe, et pour réinitialiser le signal de rampe périodique dès qu'il est égal à la tension image, générant ainsi un signal de rampe à période variable ayant, pour chaque période variable, une amplitude maximale égale à la tension image au même instant ;
- un intégrateur, connecté en sortie du comparateur, et configuré pour intégrer chaque rampe du signal de rampe à période variable sur une durée égale à la période variable, générant ainsi un signal de rampe intégré, et pour fournir au circuit RC le signal de rampe intégré.

Avantageusement, le dispositif d'émulation comprend une source de courant continu apte à alimenter un condensateur de rampe avec un courant de rampe continu, le dispositif d'émulation étant apte à réinitialiser le signal de rampe par une décharge commandée du condensateur de rampe.

Avantageusement, le dispositif d'émulation comprend un circuit de détection d'enveloppe, disposé entre l'opérateur d'élévation au carré et le circuit RC série.

Avantageusement, le dispositif d'émulation comprend :

- un dispositif de comparaison de la tension image avec une tension de référence, le dispositif de comparaison étant apte à fournir un signal de différence, représentant la différence entre la tension image et la tension de référence ; et
- un premier diviseur de tension, couplé à un premier interrupteur commandé par le signal de différence, le premier diviseur de tension étant configuré, lorsque le signal de différence est positif, pour diviser la tension image par un coefficient de réduction prédéterminé.

Avantageusement, le dispositif d'émulation comprend un deuxième diviseur de tension, couplé à un deuxième interrupteur commandé par le signal de différence, le deuxième diviseur de tension étant configuré, lorsque le signal de différence est négatif, pour diviser la tension du signal fourni au circuit RC série par le carré du coefficient de réduction prédéterminé.

L'invention se rapporte également à un dispositif de protection d'une ligne électrique vis-à-vis d'une surintensité du courant de ligne, le dispositif de protection comprenant :

- un dispositif d'émulation précité ;
- un comparateur d'état, configuré pour comparer l'état thermique cumulé avec une valeur cible ;
- un dispositif de commutation configuré pour déconnecter la ligne électrique si l'état thermique cumulé dépasse la valeur cible.

D'autres caractéristiques, détails et avantages de l'invention ressortiront à la lecture de la description faite en référence aux dessins annexés donnés à titre d'exemple et qui représentent, respectivement :

- la figure 1, une illustration des niveaux sélectifs associés à la protection thermique d'une ligne de 25 Aeff, pour une application aéronautique ;

- la figure 2, une représentation par blocs du dispositif de protection selon l'invention ;
- la figure 3, une représentation par blocs du dispositif d'émulation selon un mode de réalisation dit « analogique » ;

la figure 4, une représentation des différents composants analogiques du dispositif d'émulation selon l'invention ;

L'invention, telle que définie par le jeu des revendications ici-joint, vise à émuler un bilame, à l'aide d'un dispositif d'émulation, qui reproduit le plus fidèlement possible le comportement d'un bilame. Le bilame à émuler est caractérisé par une courbe de déclenchement (également appelée courbe de trip). La courbe de déclenchement illustre, pour un temps donné, le courant maximal permanent que peut supporter le bilame, avant de s'ouvrir, par exemple pour déclencher la protection d'une ligne ou d'une charge à protéger. La ligne est dimensionnée en fonction de la charge à protéger (objectif de protection). La protection de la ligne est donc à l'image de la protection de la charge. Par courant maximal permanent, on entend soit un courant continu, soit un courant alternatif. Dans le cas d'un courant alternatif, la valeur du courant maximal permanent correspond à la valeur efficace.

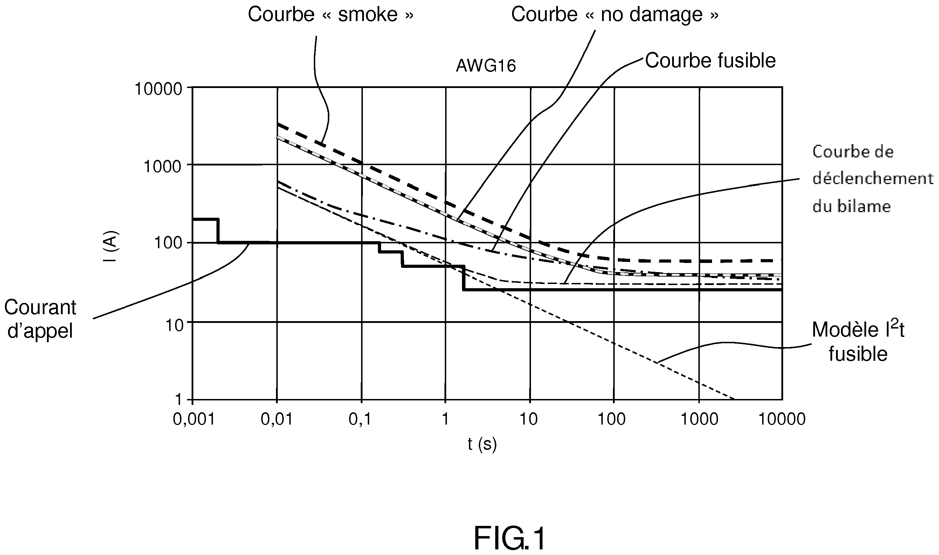

La figure 1 illustre les niveaux sélectifs associés à la protection thermique d'une ligne de cuivre de type AWG16. Une telle ligne a, de façon standardisée, un diamètre de 1,29 millimètre. Ce type de ligne est couramment utilisé dans le domaine aéronautique, pour faire circuler un courant à destination d'une charge, par exemple un moteur électrique. Il est bien entendu que l'invention peut être mise en oeuvre quelque soit la section de la ligne et quelque soit son matériau dès lors qu'elle est apte à conduire un courant électrique. La charge absorbe un courant d'appel (également appelé « inrush current »). Sur la figure 1, le courant d'appel de la charge a une valeur pour un temps infini estimée à 25 Aeff. Pour un temps infini, la courbe de déclenchement fait apparaître le courant thermique conventionnel $I_{th}$ du bilame émulé. Il s'agit du courant maximal que peut véhiculer en permanence la ligne de cuivre sans échauffement excessif.

La courbe de déclenchement du bilame doit donc se situer au-dessus de la courbe représentant le courant d'appel. Le courant thermique conventionnel $I_{th}$ doit être situé au-dessus de la valeur du courant d'appel (pour un temps infini : 30 Aeff dans l'exemple de la figure 1). Une redondance de protection peut également être mise en oeuvre avec un fusible, en cas de défaillance du bilame. La courbe de fusion du fusible est donc située légèrement au-dessus de la courbe de déclenchement du bilame. En l'occurrence, la valeur infinie de la courbe de fusion du fusible est de 35 Aeff. La figure 1 représente également une courbe dite « no damage » (ou « sans endommagement »), et une courbe « smoke » (ou « dégagement de fumée »), propres à la ligne à protéger. Elle représente de même le modèle dit « i²t» pour un fusible, à savoir une modélisation du produit du carré du courant par le temps.

La courbe de déclenchement du bilame peut être modélisée par la relation dite du bilame :

$$I_P = \frac{I_{th}}{\sqrt{1 - e^{-t/\tau}}}$$

$I_P$ est le courant de ligne de la ligne à protéger, et par exemple mesuré par un capteur de courant.
$\tau$ est une constante de temps prédéterminée en fonction du courant d'appel imposé par la charge, notamment en phase initiale d'appel de courant, qui correspond au produit de la résistance thermique du composant à protéger par la capacité thermique du composant à protéger.

De la relation précédente, on en déduit que :

$$\frac{I_P^2}{I_{th}^2} \times \left(1 - e^{\frac{-t}{\tau}}\right) = 1$$

On définit un état thermique $E_{th\_on}$, par la relation suivante :

$$E_{th\_on} = \frac{I_P^2}{I_{th}^2} \times \left(1 - e^{\frac{-t}{\tau}}\right) \qquad (1)$$

Si l'état thermique $E_{th\_on}$ est supérieur à 1, on déduit des deux relations précédentes que le courant de ligne mesuré $I_P$ dépasse la courbe de déclenchement. A l'inverse, si l'état thermique $E_{th\_on}$ est inférieur à 1, le courant mesuré $I_P$ est en-dessous de la courbe de déclenchement.

En l'absence de courant de ligne $I_P$, l'état thermique est défini par la relation suivante :

$$E_{th\_off} = \frac{I_P{}^2}{I_{th}{}^2} \times e^{\frac{-t}{\tau}} \qquad\qquad (2)$$

Dans ce cas, dans la relation (2), $I_P$ est la valeur représentative du courant de ligne à l'instant où le dispositif d'émulation EMU n'est plus alimenté, à savoir juste avant une mise hors tension.

Les relations (1) et (2) permettent d'obtenir un état thermique normalisé (compris entre 0 et 1), à un instant donné, facilement exploitable. Le courant thermique conventionnel $I_{th}$ correspond au courant maximal que peut véhiculer en permanence la charge (ou la ligne, dont la protection est à l'image de la charge), à savoir lorsque $t \to \infty$.

On peut alors définir un état thermique cumulé $E_{th\_n}$, qui correspond à l'état thermique du bilame émulé cumulé dans le temps.

L'état thermique cumulé $E_{th\_n}$ est obtenu en tenant compte d'un état thermique actuel (qui peut être l'état thermique $E_{th\_on}$ lorsque le dispositif d'émulation EMU est alimenté, ou l'état thermique $E_{th\_off}$ lorsque le dispositif d'émulation EMU n'est pas alimenté), et d'un état thermique initial $E_{th\_i}$.

Par exemple, lors de la mise sous tension initiale d'un moteur électrique, un courant de ligne $I_P$ ayant une valeur particulièrement élevée peut être mesuré (régime dit transitoire). Puis, la valeur du courant de ligne $I_P$ peut baisser (régime dit établi). Lors du régime transitoire, la valeur de l'état thermique cumulé $E_{th\_h}$ est obtenue en additionnant la valeur de l'état thermique initial $E_{th\_i}$, qui peut être éventuellement nulle, avec la valeur de l'état thermique actuel $E_{th\_on}$ lorsque le dispositif d'émulation EMU est alimenté.

Lors du régime établi, la valeur de l'état thermique cumulé $E_{th\_h}$ est obtenue en additionnant la valeur de l'état thermique initial $E_{th\_i}$, qui est égal à la valeur de l'état thermique cumulé $E_{th\_n}$ à la fin du régime transitoire, avec la valeur de l'état thermique actuel $E_{th\_on}$ lorsque le dispositif d'émulation EMU est alimenté. La valeur du courant de ligne $I_P$ est dans ce cas plus faible pour le régime établi que pour le régime transitoire.

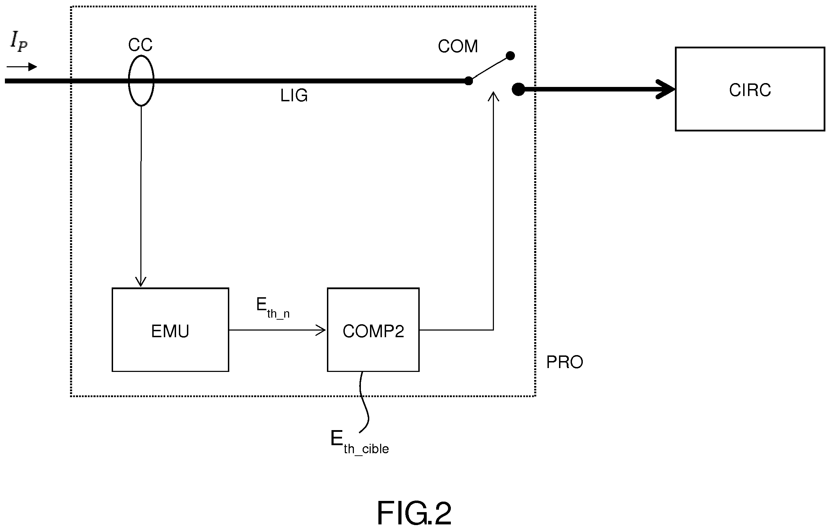

La figure 2 illustre une représentation par blocs d'un dispositif de protection PRO intégrant un dispositif d'émulation EMU conforme à l'invention. La ligne électrique LIG à protéger peut être connectée à un circuit électrique CIRC. La valeur de l'état thermique cumulé $E_{th\_h}$ est calculée par le dispositif d'émulation EMU, à partir du courant de ligne $I_P$ mesuré par le capteur de courant CC. Un comparateur d'état COMP2 compare l'état thermique cumulé $E_{th\_n}$ avec une valeur cible $E_{th\_cible}$. La valeur cible $E_{th\_cible}$ peut être définie manuellement en fonction de la ligne électrique LIG à protéger d'une potentielle surintensité. Le dispositif de protection PRO comprend également un dispositif de commutation COM, qui déconnecte la ligne LIG si le comparateur d'état COMP2 détecte que la valeur de l'état thermique cumulé $E_{th\_n}$ est supérieure à la valeur cible $E_{th\_cible}$. Le dispositif de commutation COM peut prendre la forme d'un interrupteur commandé par la sortie du comparateur d'état COMP2. Le dispositif de commutation COM est passant tant que la valeur de l'état thermique cumulé $E_{th\_h}$ est inférieure à la valeur cible $E_{th\_cible}$, et bloquant dans le cas contraire.

Dans un exemple de mise en oeuvre de l'invention, le bilame émulé est soumis à une alternance de périodes où il est alimenté en courant (périodes d'échauffement), avec des périodes où il n'est pas alimenté en courant (périodes de refroidissement). On peut alors définir par récurrence la valeur l'état thermique cumulé $E_{th\_n}$ à la n^ème période.

Le calcul d'une exponentielle étant particulièrement complexe en numérique, on peut effectuer, pour une mise en oeuvre dans un circuit numérique, une approximation de calcul pour un temps $t$ petit par rapport à la constante de temps $\tau$ :

$$1 - e^{\frac{-t}{\tau}} \cong \frac{t}{\tau}$$

Et

$$e^{\frac{-t}{\tau}} \cong 1 - \frac{t}{\tau}$$

Ainsi, pour une n^ème période, la valeur l'état thermique cumulé $E_{th\_h}$ est déterminée par récurrence selon la relation suivante :

$$E_{th\_n} = E_{th\_off\_n-1} + E_{th\_on\_n} = \frac{I_{P_{n-1}}{}^2}{I_{th}{}^2} \times \left(1 - \frac{T_1}{\tau}\right) + \frac{I_{P_n}{}^2}{I_{th}{}^2} \times \left(\frac{T_2}{\tau}\right)$$

$E_{th\_off\_n-1}$ est la valeur de l'état thermique à la fin de la période précédente de mise hors tension $T_1$. $E_{th\_on\_n}$

est la valeur de l'état thermique à la fin de la période actuelle de mise sous tension $T_2$ . Les périodes de mise hors tension $T_1$ et de mise sous tension $T_2$ peuvent avoir des durées différentes, ou être égales pour un signal d'entrée alternatif. $I_{P_{n-1}}$ est la valeur du courant de ligne juste avant la mise hors tension, et $I_{P_n}$ la valeur du courant de ligne lors de la mise sous tension. Par valeur du courant, on entend la valeur efficace du courant. En particulier, pour un signal d'entrée alternatif, la valeur du courant de ligne $I_{P_{n-1}}$ lors de la mise hors tension et la valeur du courant de ligne $I_{P_n}$ lors de la mise sous tension sont égales.

Selon un premier mode de réalisation, la relation de récurrence précitée peut être avantageusement mise en oeuvre dans un circuit numérique programmable, par exemple un circuit FPGA (pour « Field-Programmable Gate Array », réseau de portes programmables), un circuit ASIC (pour Application-Specific Integrated Circuit, circuit intégré propre à une application), ou encore un microcontrôleur.

Selon ce mode de réalisation, le dispositif d'émulation EMU, implémenté dans un circuit numérique programmable, comprend un opérateur d'élévation au carré. L'opérateur est programmé de façon numérique pour élever au carré une valeur représentative du courant de ligne $I_p$ issu du capteur de courant CC, conformément aux relations (1) et (2). L'opérateur peut être programmé pour élever la valeur représentative du courant de ligne $I_p$ à une puissance sensiblement différente de 2.

Dans le cas où le dispositif d'émulation n'est pas alimenté (source hors tension), il convient d'équiper le circuit numérique programmable d'un compteur. En effet, lorsque le circuit numérique programmable n'est pas alimenté, le compteur permet d'enregistrer la durée d'absence de courant de ligne. Cette durée peut ensuite être utilisée pour la détermination de l'état thermique initial $E_{th\_i}$.

L'invention peut également, selon un deuxième mode de réalisation, être mise en oeuvre dans un circuit analogique. Ce mode de réalisation ne fait pas appel à des composants numériques de type DSP, ASIC ou FPGA, et n'a donc pas à satisfaire le niveau d'exigence élevé de la norme RTCA DO-254 concernant les composants numériques embarqués dans les aéronefs. Pour cela, on utilise les relations (1) et (2) définies précédemment. Le circuit proposé implémente de façon analogique la fonction de mise au carré du courant de ligne $I_p$, ainsi que les fonctions $\left(1 - e^{\frac{-t}{\tau}}\right)$ et $\left(e^{\frac{-t}{\tau}}\right)$, implémentées respectivement pour les périodes de mise sous tension et pour les périodes de mise hors tension du bilame émulé.

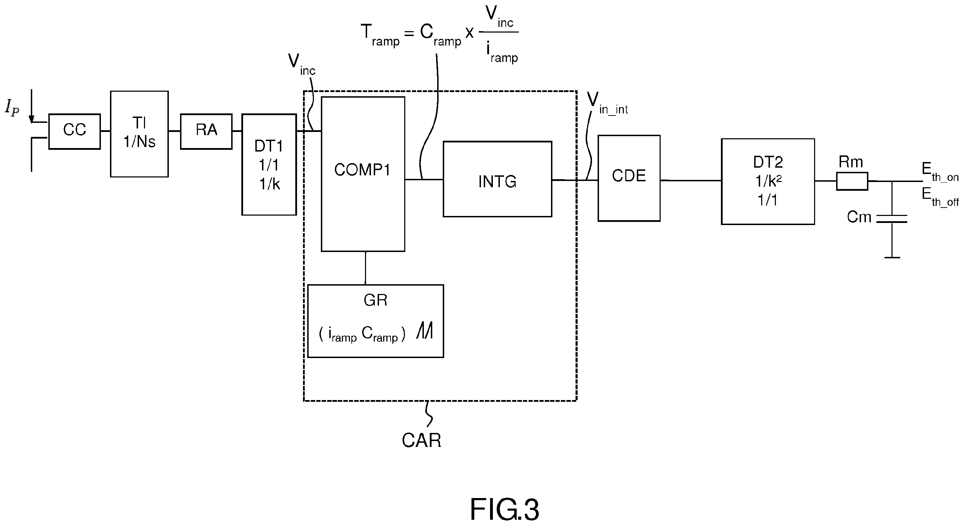

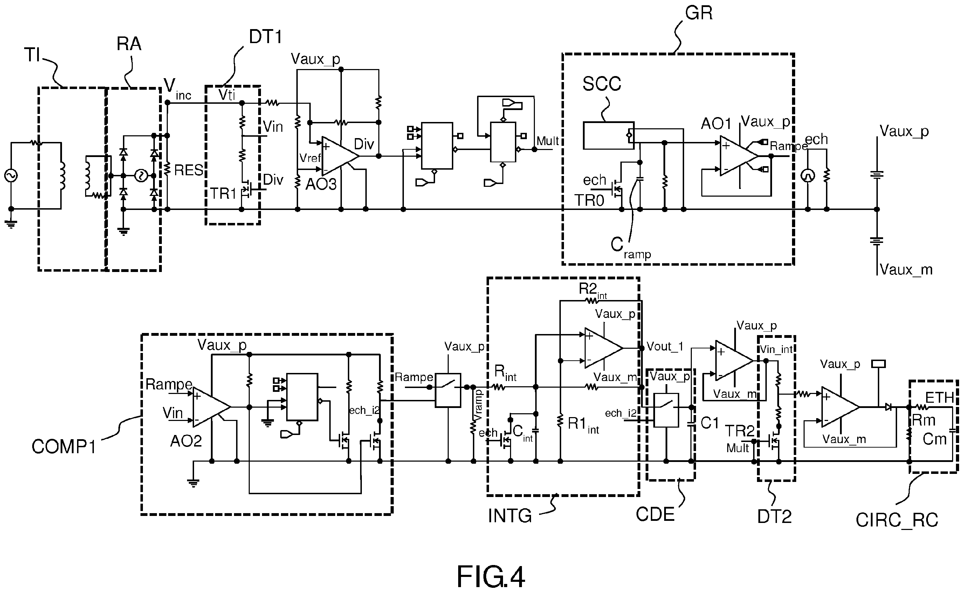

La figure 3 illustre le circuit analogique selon l'invention, en représentation par blocs fonctionnels. Parallèlement à cette représentation par blocs, la figure 4 représente en détail les composants employés, de façon non limitative. Le courant de ligne $I_P$, fourni par le capteur de courant CC, est transmis à un transformateur d'intensité TI, afin de diviser la valeur du courant par un facteur prédéterminé Ns. Cet abaissement de l'intensité permet d'utiliser dans le circuit analogique des composants capables de traiter des intensités plus faibles. Par exemple, le transformateur d'intensité TI peut être configuré pour passer d'une intensité de l'ordre de la centaine voire du millier d'Ampères, à une intensité de l'ordre de l'Ampère, en appliquant le rapport souhaité aux nombre de spires du primaire par rapport au nombre de spires du secondaire.

Les alternances négatives du courant de ligne $I_P$ abaissé sont ensuite redressées, par un redresseur double alternance RA. Le redresseur double alternance peut être conçu par exemple selon un montage en pont de diodes, comme illustré sur la figure 4. La sortie du redresseur double alternance RA est donc la valeur absolue du signal issu du transformateur d'intensité TI.

Une résistance RES, illustrée figure 4, est connectée en sortie du redresseur double alternance RA. Ainsi, la valeur représentative du courant de ligne $I_P$ est une tension du courant de ligne $I_p$, appelée par la suite tension image $V_{inc}$.

Selon les relations (1) et (2), une mise au carré de la valeur du courant de ligne $I_P$ doit être réalisée. Afin d'effectuer une telle mise au carré de la valeur du courant de ligne $I_P$, il est possible d'utiliser un multiplieur, qui multiplie la valeur du courant de ligne $I_P$ par elle-même. Toutefois, les multiplieurs analogiques sont des dispositifs complexes.

Le calcul de la mise au carré selon l'invention est donc réalisé en passant par le calcul d'une intégrale. Le calcul de l'intégrale est effectué sur un signal de rampe, produit par un générateur de rampe GR. Un signal de rampe est généré par une charge d'un condensateur de rampe $C_{ramp}$, représenté figure 4. Le condensateur de rampe $C_{ramp}$ est alimenté par un courant de rampe continu $i_{ramp}$, généré par une source de courant continu SCC Un amplificateur opérationnel AO1 monté en suiveur peut être couplé au condensateur de rampe $C_{ramp}$ et à la source de courant continu SCC, afin de réaliser une adaptation d'impédance avec l'étage suivant. Un comparateur COMP1 reçoit en entrée la tension image $V_{inc}$ et le signal de rampe. Le comparateur COMP1 peut prendre la forme d'un amplificateur opérationnel AO2 qui détermine la différence entre la tension image $V_{inc}$ et le signal de rampe, comme illustré sur la figure 4. La différence est comparée à une tension de référence nulle. A partir de la relation caractéristique du condensateur, on peut établir, lorsque la tension image $V_{inc}$ et le signal de rampe ont la même amplitude, la relation suivante :

$$t_{ramp} = C_{ramp} \times \frac{V_{inc}}{i_{ramp}} \qquad (3)$$

A l'instant où la tension image $V_{inc}$ et le signal de rampe ont la même amplitude, le comparateur COMP1 commande la décharge du condensateur de rampe $C_{ramp}$. Un transistor TR0, lui-même couplé au comparateur COMP1, peut être placé en parallèle du condensateur de rampe $C_{ramp}$, afin de commander la décharge du condensateur de rampe $C_{ramp}$. Une fois déchargé, le condensateur de rampe $C_{ramp}$ se recharge à nouveau, jusqu'à ce que la tension image $V_{inc}$ et le signal de rampe aient de nouveau la même amplitude.

La sortie du comparateur COMP1 est donc un signal de rampe à période $t_{ramp}$ variable ayant, pour chaque période $t_{ramp}$ variable, une amplitude maximale égale à la tension image $V_{inc}$ au même instant. Le signal de rampe à période $t_{ramp}$ variable passe ensuite par un intégrateur INTG. L'intégrateur INTG, représenté en détail à la figure 4, est caractérisé par une résistance $R_{int}$ et par un condensateur $C_{int}$ sur l'entrée noninverseuse, ainsi que par deux résistances $R1_{int}$ et $R2_{int}$ sur l'entrée inverseuse. L'intégrateur INTG détermine une tension de sortie d'intégrateur $V_{in\_int}$ :

$$V_{in\_int} = \frac{i_{ramp}\left(\frac{R2_{int}}{R1_{int}} + 1\right)}{C_{int}C_{ramp}R_{int}} \times \int_{0}^{t_{ramp}} t\,dt$$

$$V_{in\_int} = \frac{i_{ramp}t_{ramp}^{2}\left(\frac{R2_{int}}{R1_{int}} + 1\right)}{2C_{int}C_{ramp}R_{int}}$$

Ainsi, à partir de la relation (3) :

$$V_{in\_int} = k_1 V_{inc}^{2} = k_2 I_P^{2}$$

Où $k_1$ et $k_2$ sont des constantes de proportionnalité.

L'opérateur d'élévation au carré CAR, constitué du comparateur COMP1 et de l'intégrateur INTG, permet ainsi d'obtenir un carré de la valeur représentative du courant de ligne $I_P$.

Un circuit de détection d'enveloppe CDE est couplé à l'opérateur d'élévation au carré CAR, afin de récupérer l'enveloppe du signal mis au carré. Différents types de circuits de détection d'enveloppe peuvent être employés, notamment un circuit de détection de crête. Avantageusement, le circuit de détection d'enveloppe CDE est un échantillonneur-bloqueur. Il comprend un interrupteur et un condensateur C1. L'interrupteur est commandé par un signal d'échantillonnage *ech_i2,* comme illustré par la figure 4. Tant que l'interrupteur est fermé, le condensateur joue le rôle d'élément mémoire vis-à-vis du signal issu de l'intégrateur INTG. Lorsque l'interrupteur reçoit une impulsion d'ouverture, le condensateur, isolé vis-à-vis du signal issu de l'intégrateur INTG, restitue la valeur mémorisée. Avantageusement, le signal d'échantillonnage fixé par le comparateur COMP1. Il transmet l'impulsion d'ouverture à chaque fois que la tension image $V_{inc}$ et le signal de rampe ont la même amplitude. Ainsi, l'échantillonneur-bloqueur récupère, pour chaque période variable $t_{ramp}$, le maximum du signal de rampe à période variable, avec une sortie constante entre chaque commande d'ouverture. Une enveloppe sensiblement égale au carré de la tension image peut ainsi être récupérée.

La valeur de l'état thermique cumulé $E_{th\_n}$ est mesurée aux bornes du condensateur d'un circuit RC série CIRC_RC. Le circuit RC série CIRC_RC comprend une résistance Rm connectée directement ou indirectement au circuit de détection d'enveloppe CDE, et un condensateur Cm aux bornes duquel est mesurée la valeur de l'état thermique cumulé $E_{th\_n}$. La charge du condensateur Cm émule le comportement d'un bilame lors des phases d'échauffement. Le circuit RC série CIRC_RC réalise ainsi la fonction -t $\left(1 - e^{\frac{-t}{\tau}}\right)$, décrite dans la relation (1). La décharge du condensateur Cm émule le comportement d'un bilame lors des phases de refroidissement. Le circuit -t RC série CIRC_RC réalise ainsi la fonction $\left(e^{\frac{-t}{\tau}}\right)$, décrite dans la relation (2). Il est à noter que :

$$\tau = Rm \times Cm$$

La constante de temps $\tau$ se retrouve dans la relation du bilame. Le choix des valeurs numériques de la résistance Rm et du condensateur Cm détermine donc l'allure de la courbe de déclenchement du bilame, qui doit se situer de préférence au-dessus de la courbe de courant d'appel imposé par la charge.

Le dispositif d'émulation précité est configuré pour travailler avec un courant de ligne $I_P$ ayant une grande dynamique. La valeur du courant de ligne $I_P$ peut notamment passer d'une valeur de courant nominal $I_n$, qui correspond à la valeur maximale du courant d'appel (200 Aeff dans l'exemple de la figure 1), à une valeur dix fois plus petite en régime établi. De même, la valeur du courant de ligne $I_P$ peut fortement dépasser la valeur de courant nominal $I_n$, par exemple au démarrage d'un moteur électrique. La valeur du courant de ligne $I_P$ peut être par moment dix fois plus petite que la valeur de courant nominal $I_n$, et par moment être dix fois plus grande. Cette dynamique importante peut engendrer une perte de précision pour la détermination de l'état thermique cumulé $E_{th\_n}$.

Ainsi, pour un courant de ligne $I_P$ ayant une valeur supérieure à la valeur du courant nominal $I_n$, la tension image $V_{inc}$ du courant de ligne $I_P$ est divisée par un coefficient de réduction k prédéterminé. Pour cela, un premier diviseur de tension DT1 est connecté à la résistance RES. Le premier diviseur de tension DT1 peut être de type résistif. Sur la figure 4, un premier interrupteur commandé TR1 est passant lorsque la tension image $V_{inc}$ est détectée comme étant supérieure à une tension de seuil $V_{ref}$. La tension de seuil $V_{ref}$ est déterminée en fonction de la valeur de courant nominal $I_n$. Dans ce cas, une fraction du signal issu de la résistance RES est prélevée aux bornes de la résistance de plus petite valeur. La détection du dépassement de la tension de seuil $V_{ref}$ peut être effectuée par un comparateur AO3. Le comparateur AO3 fournit un signal de différence Div, représentant la différence entre la tension image $V_{inc}$ et la tension de référence Vref.

Lorsque le comparateur AO3 ne détecte pas de dépassement de la tension de seuil $V_{ref}$, la tension issue du circuit détecteur d'enveloppe CDE est divisée par le coefficient $k^2$, et la tension image $V_{inc}$ du courant de ligne $I_P$ n'est pas par divisée par le coefficient de réduction k. Pour cela, un deuxième diviseur de tension DT2 est connecté entre le circuit détecteur d'enveloppe CDE et le circuit RC série CIRC_RC. Un deuxième interrupteur commandé TR2 est passant lorsque la tension image $V_{inc}$ est détectée comme étant inférieure à la tension de seuil $V_{ref}$, à savoir lorsque le signal de différence Div est négatif.

D'autres modes de réalisation peuvent être envisagés, afin de tenir compte de la grande dynamique du courant de ligne $I_P$. Par exemple, un seuil haut (par exemple très supérieur au courant nominal $I_n$) et un seuil bas (par exemple très inférieur au courant nominal $I_n$). peuvent être définis. Dans ce cas, le coefficient de réduction k n'est appliqué à la tension image $V_{inc}$ que si le courant de ligne est supérieur au seuil haut, et le coefficient de réduction $k^2$ n'est appliqué à la sortie du circuit détecteur d'enveloppe CDE que si le courant de ligne est inférieur au seuil bas.

## Revendications

1. Dispositif d'émulation (EMU) d'un bilame, le dispositif d'émulation (EMU) comprenant un capteur de courant (CC) apte à mesurer un courant de ligne ($I_P$) parcourant le dispositif d'émulation (EMU), le dispositif d'émulation (EMU) étant apte à fournir une valeur représentative d'un état thermique cumulé ($E_{th\_n}$) dans le temps $t$, appelée état thermique cumulé ($E_{th\_n}$), en additionnant par récurrence une valeur représentative d'un état thermique initial ($E_{th\_i}$), appelée état thermique initial ($E_{th\_i}$), et une valeur représentative d'un état thermique actuel ($E_{th\_on}$, $E_{th\_off}$), appelée état thermique actuel ($E_{th\_on}$, $E_{th\_off}$), déterminé en fonction du courant de ligne ($I_P$), le dispositif d'émulation (EMU) comprenant un opérateur d'élévation au carré (CAR) configuré pour élever au carré une valeur représentative du courant de ligne ($I_P$) issue du capteur de courant (CC), la valeur représentative du courant de ligne ($I_P$) étant une tension image (Vinc) du courant de ligne ($I_P$), le dispositif d'émulation (EMU) comprenant au moins un circuit RC série (CIRC_RC), et comprenant au moins un condensateur (Cm) aux bornes duquel est mesurée l'état thermique cumulé ($E_{th\_n}$), le circuit RC série (CIRC_RC) étant connecté à l'opérateur d'élévation au carré (CAR), l'état thermique initial ($E_{th\_i}$) étant déterminé par l'état de charge initiale du condensateur (Cm) à la fin d'un cycle de charge ou de décharge, l'état thermique actuel ($E_{th\_on}$, $E_{th\_off}$) étant déterminé par l'évolution de l'état de charge du condensateur (Cm), **caractérisé en ce que** l'opérateur d'élévation au carré (CAR) comprend :

   - un comparateur (COMP1), configuré pour comparer la tension image (Vinc) avec un signal de rampe, et pour réinitialiser le signal de rampe périodique dès qu'il est égal à la tension image (Vinc), générant ainsi un signal de rampe à période variable ($t_{ramp}$) ayant, pour chaque période variable ($t_{ramp}$), une amplitude maximale égale à la tension image (Vinc) au même instant ;
   - un intégrateur (INTG), connecté en sortie du comparateur (COMP1), et configuré pour intégrer chaque rampe du signal de rampe à période variable sur une durée égale à la période variable ($t_{ramp}$), générant ainsi un signal de rampe intégré, et pour fournir au circuit RC le signal de rampe intégré.

2. Dispositif d'émulation selon la revendication 1, comprenant une source de courant continu (SCC) apte à alimenter un condensateur de rampe ($C_{ramp}$) avec un courant de rampe continu ($i_{ramp}$), le dispositif d'émulation (EMU) étant apte à réinitialiser le signal de rampe par une décharge commandée du condensateur de rampe ($C_{ramp}$).

3. Dispositif d'émulation selon l'une des revendications 1 ou 2, comprenant un circuit de détection d'enveloppe (CDE), disposé entre l'opérateur d'élévation au carré (CAR) et le circuit RC série (CIRC_RC).

4. Dispositif d'émulation selon l'une des revendications 1 à 3, comprenant :

   - un dispositif de comparaison (AO3) de la tension image (Vinc) avec une tension de référence (Vref), le dispositif de comparaison (AO3) étant apte à fournir un signal de différence (Div), représentant la différence entre la tension image (Vinc) et la tension de référence (Vref) ; et
   - un premier diviseur de tension (DT1), couplé à un premier interrupteur (TR1) commandé par le signal de différence (Div), le premier diviseur de tension (DT1) étant configuré, lorsque le signal de différence (Div) est positif, pour diviser la tension image (Vinc) par un coefficient de réduction (k) prédéterminé.

5. Dispositif d'émulation selon la revendication 4, comprenant un deuxième diviseur de tension (DT2), couplé à un deuxième interrupteur (TR2) commandé par le signal de différence (Div), le deuxième diviseur de tension (DT2) étant configuré, lorsque le signal de différence (Div) est négatif, pour diviser la tension du signal fourni au circuit RC série par le carré du coefficient de réduction (k) prédéterminé.

6. Dispositif de protection (PRO) d'une ligne électrique (LIG) vis-à-vis d'une surintensité du courant de ligne ($I_P$), **caractérisé en ce que** le dispositif de protection (PRO) comprend :

   - un dispositif d'émulation (EMU) selon l'une des revendications précédentes ;
   - un comparateur d'état (COMP2), configuré pour comparer l'état thermique cumulé ($E_{th\_n}$) avec une valeur cible ($E_{th\_cible}$) ;
   - un dispositif de commutation (COM) configuré pour déconnecter la ligne électrique (LIG) si l'état thermique cumulé ($E_{th\_n}$) dépasse la valeur cible.

## Patentansprüche

1. Vorrichtung (EMU) zum Emulieren eines Bimetalls, wobei die Emulationsvorrichtung (EMU) einen Stromsensor (CC) umfasst, der geeignet ist, um einen durch die Emulationsvorrichtung (EMU) fließenden Leitungsstrom ($I_p$) zu messen, wobei die Emulationsvorrichtung (EMU) geeignet ist, um einen Wert zu liefern, der für einen kumulativen thermischen Zustand ($E_{th\_n}$) über die Zeit $t$ repräsentativ ist, kumulativer thermischer Zustand ($E_{th\_n}$) genannt, durch rekursives Addieren eines Wertes, der für einen anfänglichen thermischen Zustand ($E_{th\_i}$) repräsentativ ist, anfänglicher thermischer Zustand ($E_{th\_i}$) genannt, und eines Wertes, der für einen aktuellen thermischen Zustand ($E_{th\_on}$, $E_{th\_off}$) repräsentativ ist, aktueller thermischer Zustand ($E_{th\_on}$, $E_{th\_off}$) genannt, bestimmt in Abhängigkeit von dem Leitungsstrom ($I_p$), wobei die Emulationsvorrichtung (EMU) einen Quadrierungsoperator (CAR) umfasst, konfiguriert zum Erheben eines für den Leitungsstrom ($I_p$) repräsentativen, vom Stromsensor (CC) ausgegebenen Wertes zum Quadrat, wobei der für den Leitungsstrom ($I_p$) repräsentative Wert eine Bildspannung (Vinc) des Leitungsstroms ($I_p$) ist, wobei die Emulationsvorrichtung (EMU) mindestens eine serielle RC-Schaltung (CIRC_RC) umfasst und mindestens einen Kondensator (Cm) umfasst, an dessen Anschlüssen der kumulative thermische Zustand ($E_{th\_n}$) gemessen wird, wobei die serielle RC-Schaltung (CIRC_RC) mit dem Quadrierungsoperator (CAR) verbunden ist, wobei der anfängliche thermische Zustand ($E_{th\_i}$) durch den anfänglichen Ladezustand des Kondensators (Cm) am Ende eines Lade- oder Entladezyklus bestimmt wird, wobei der aktuelle thermische Zustand ($E_{th\_on}$, $E_{th\_off}$) durch die Entwicklung des Ladezustands des Kondensators (Cm) bestimmt wird, **dadurch gekennzeichnet, dass** der Quadrierungsoperator (CAR) Folgendes umfasst:

   - einen Komparator (COMP1), konfiguriert zum Vergleichen der Bildspannung (Vinc) mit einem Rampensignal, und zum Neuinitialisieren des periodischen Rampensignals, sobald es gleich der Bildspannung (Vinc) ist, wodurch ein Rampensignal mit variabler Periode ($t_{ramp}$) erzeugt wird, das für jede variable Periode ($t_{ramp}$) eine maximale Amplitude aufweist, die gleich der Bildspannung (Vinc) zum selben Zeitpunkt ist;
   - einen Integrator (INTG), der mit dem Ausgang des Komparators (COMP1) verbunden und zum Integrieren jeder Rampe des Rampensignals mit variabler Periode über eine Dauer gleich der variablen Periode ($t_{ramp}$), wodurch ein integriertes Rampensignal erzeugt wird, und zum Zuführen des integrierten Rampensignals zu der RC-Schaltung konfiguriert ist.

2. Emulationsvorrichtung nach Anspruch 1, die eine Gleichstromquelle (SCC) umfasst, die zum Versorgen eines Rampenkondensators ($C_{ramp}$) mit einem Rampengleichstrom ($I_{ramp}$) geeignet ist, wobei die Emulationsvorrichtung (EMU) zum Neuinitialisieren des Rampensignals durch eine gesteuerte Entladung des Rampenkondensators ($C_{ramp}$) geeignet ist.

3. Emulationsvorrichtung nach Anspruch 1 oder 2, die eine Hüllkurvenerfassungsschaltung (CDE) umfasst, die zwischen dem Quadrierungsoperator (CAR) und der seriellen RC-Schaltung (CIRC_RC) angeordnet ist.

4. Emulationsvorrichtung nach einem der Ansprüche 1 bis 3, die Folgendes umfasst:

   - eine Vorrichtung (AO3) zum Vergleichen der Bildspannung (Vinc) mit einer Referenzspannung (Vref), wobei die Vergleichsvorrichtung (AO3) geeignet ist, um ein Differenzsignal (Div) zu liefern, das die Differenz zwischen der Bildspannung (Vinc) und der Referenzspannung (Vref) repräsentiert; und
   - einen ersten Spannungsteiler (DT1), der mit einem ersten Schalter (TR1) gekoppelt ist, der durch das Differenzsignal (Div) gesteuert wird, wobei der erste Spannungsteiler (DT1) so konfiguriert ist, dass er, wenn das Differenzsignal (Div) positiv ist, die Bildspannung (Vinc) durch einen vorbestimmten Reduktionskoeffizienten (k) teilt.

5. Emulationsvorrichtung nach Anspruch 4, die einen zweiten Spannungsteiler (DT2) umfasst, der mit einem zweiten Schalter (TR2) gekoppelt ist, der durch das Differenzsignal (Div) gesteuert wird, wobei der zweite Spannungsteiler (DT2) so konfiguriert ist, dass er, wenn das Differenzsignal (Div) negativ ist, die Spannung des der seriellen RC-Schaltung bereitgestellten Signals durch das Quadrat des vorbestimmten Reduktionskoeffizienten (k) teilt.

6. Vorrichtung (PRO) zum Schützen einer elektrischen Leitung (LIG) vor einem Überstrom des Leitungsstroms ($I_P$), **dadurch gekennzeichnet, dass** die Schutzvorrichtung (PRO) Folgendes umfasst:

   - eine Emulationsvorrichtung (EMU) nach einem der vorhergehenden Ansprüche;
   - einen Zustandskomparator (COMP2), der zum Vergleichen des kumulativen thermischen Zustands ($E_{th\_n}$) mit einem Zielwert ($E_{th\_cible}$) konfiguriert ist;
   - eine Schaltvorrichtung (COM), die zum Trennen der Stromleitung (LIG) konfiguriert ist, wenn der kumulative thermische Zustand ($E_{th\_n}$) den Zielwert überschreitet.

**Claims**

1. A device (EMU) for emulating a bimetallic strip, the emulating device (EMU) comprising a current sensor (CC) capable of measuring a line current ($I_P$) flowing through the emulating device (EMU), the emulating device (EMU) being capable of providing a value representative of a cumulative thermal state ($E_{th\_n}$) over time $t$, which is referred to as cumulative thermal state ($E_{th\_n}$), by recursively adding a value representative of an initial thermal state ($E_{th\_i}$), which is referred to as initial thermal state ($E_{th\_i}$), and a value representative of a present thermal state ($E_{th\_on}$, $E_{th\_off}$), which is referred to as present thermal state ($E_{th\_on}$, $E_{th\_off}$), which is determined depending on the line current ($I_P$), the emulating device (EMU) comprising a squaring operator (CAR) configured to square a value representative of the line current ($I_P$), which is output by the current sensor (CC), the value representative of the line current ($I_P$) being an image voltage (Vinc) of the line current ($I_P$), the emulating device (EMU) comprising at least one series RC circuit (CIRC_RC), and comprising at least one capacitor (Cm), at the terminals of which the cumulative thermal state ($E_{th\_n}$) is measured, the series RC circuit (CIRC_RC) being connected to the squaring operator (CAR), the initial thermal state ($E_{th\_i}$) being determined by the initial state of charge of the capacitor (Cm) at the end of a charging or discharging cycle, the present thermal state ($E_{th\_on}$, $E_{th\_off}$) being determined by the evolution of the state of charge of the capacitor (Cm), **characterised in that** the squaring operator (CAR) comprises:

   - a comparator (COMP1) configured to compare the image voltage (Vinc) with a ramp signal and to reset the periodic ramp signal as soon as it is equal to the image voltage (Vine), thus generating a variable period ramp signal ($t_{ramp}$) having, for each variable period ($t_{ramp}$), a maximum amplitude equal to the image voltage (Vinc) at the same instant;
   - an integrator (INTG) connected to the output of the comparator (COMP1) and configured to integrate each ramp of the variable period ramp signal over a duration equal to the variable period ($t_{ramp}$), thus generating an integrated ramp signal, and to provide the RC circuit with the integrated ramp signal.

2. The emulating device according to claim 1, comprising a direct current source (SCC) capable of supplying a ramp capacitor ($C_{ramp}$) with a ramp direct current ($i_{ramp}$), the emulating device (EMU) being capable of resetting the ramp signal by means of a controlled discharging of the ramp capacitor ($C_{ramp}$).

3. The emulating device according to one of claims 1 or 2, comprising an envelope detection circuit (CDE) arranged between the squaring operator (CAR) and the series RC circuit (CIRC_RC).

4. The emulating device according to one of claims 1 to 3, comprising:

- a device (AO3) for comparing the image voltage (Vinc) with a reference voltage (Vref), the comparison device (AO3) being capable of providing a difference signal (Div) representing the difference between the image voltage (Vinc) and the reference voltage (Vref); and
- a first voltage divider (DT1) coupled to a first switch (TR1) controlled by the difference signal (Div), the first voltage divider (DT1) being configured so as, when the difference signal (Div) is positive, to divide the image voltage (Vinc) by a predetermined coefficient of reduction (k).

5. The emulating device according to claim 4, comprising a second voltage divider (DT2) coupled to a second switch (TR2) controlled by the difference signal (Div), the second voltage divider (DT2) being configured, when the difference signal (Div) is negative, to divide the voltage of the signal provided to the series RC circuit by the square of the predetermined coefficient of reduction (k).

6. A device (PRO) for protecting an electrical line (LIG) from an overcurrent of the line current ($I_P$), **characterised in that** the protective device (PRO) comprises:

- an emulating device (EMU) according to one of the preceding claims;
- a state comparator (COMP2) configured to compare the cumulative thermal state ($E_{th\_n}$) with a target value ($E_{th\_dible}$) ;
- a switch device (COM) configured to disconnect the electrical line (LIG) if the cumulative thermal state ($E_{th\_n}$) exceeds the target value.

Courbe de déclenchement du bilame

Modèle I²t fusible

Courbe « no damage »

Courbe fusible

AWG16

Courbe « smoke »

I (A)

Courant d'appel

t (s)

FIG.1

FIG.2

FIG.3

EP 3 824 522 B1

FIG.4

EP 3 824 522 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9704511 A
- US 2007014066 A
- FR 2130210
- JP 2005295738 U